# EUROPÄISCHE PATENTSCHRIFT

(11) **EP 1 019 177 B1**
(45) Veröffentlichungstag und Bekanntmachung des Hinweises auf die Patenterteilung: **28.01.2004**
(21) Anmeldenummer: 98945215.6
(22) Anmeldetag: 12.08.1998
(51) Int. Cl.: B01D 53/94, B01J 35/04, F01N 3/05, F01N 3/28

(54) **KATALYSATOR AUS UNEDLEM METALL FÜR EINEN KLEINMOTOR SOWIE VERFAHREN ZU SEINER HERSTELLUNG**
BASE METAL CATALYST FOR SMALL-SIZE MOTORS AND PROCESS FOR ITS PREPARATION
CATALYSEUR EN METAL COMMUN POUR MOTEUR DE PETITE DIMENSION ET PROCEDE POUR SA PRODCUTION

(30) Priorität: 22.08.1997 DE 19736628
(43) Veröffentlichungstag der Anmeldung: 19.07.2000
(73) Patentinhaber: Emitec Gesellschaft für Emissionstechnologie mbH, 53797 Lohmar (DE)
(72) Erfinder: BERGMANN, Andrée, D-53797 Lohmar (DE); MAUS, Wolfgang, D-51429 Bergisch Gladbach (DE)
(74) Vertreter: Kahlhöfer, Hermann, Dipl.-Phys.
(86) Internationale Anmeldenummer: PCT/EP1998/005098
(87) Internationale Veröffentlichungsnummer: WO 1999/010081

(56) Entgegenhaltungen:
- WO-A-96/23133
- DE-A- 3 729 477
- DE-A- 3 804 722
- DE-A- 4 017 267
- DE-A- 19 536 752
- DE-C- 4 416 469
- DATABASE WPI Week 8330 Derwent Publications Ltd., London, GB; AN 83-720731 XP002092958 & JP 58 104084 A (MITSUBISHI ELECTRIC CORP.), 21. Juni 1983

## Beschreibung

Die vorliegende Erfindung betrifft einen Katalysator zum Reinigen eines Abgasstromes eines Kleinmotors sowie ein Verfahren zum Herstellen eines Katalysator für einen Kleinmotor.

Aufgrund der in den letzten Jahrzehnten sich entwickelten verschärften Abgasgesetzgebung ist die Katalysatortechnik für Verbrennungsmotoren insbesondere bei Kraftfahrzeugen zu immer höheren Wirkungsgraden weiterentwickelt worden sowie einem immer kürzeren Zündverzug. Die Entwicklung weist dazu die Ausbildung von großflächigen Katalysatoren auf, die in der Lage sind, möglichst nahezu 100 % der umzusetzenden Abgasbestandteile auch wirklich zu katalysieren. Dieses wird zum einen durch die Weiterentwicklung von noch beständigeren Katalysatorträgerkörpern erreicht, die eine große Fläche haben, beispielsweise in der WO 96/16188 offenbart. Zum anderen nimmt mit fortschreitender Anwendung der Katalysatortechnik auch das Wissen um anwendbare katalytische Materialien sowie deren Verhalten und Verarbeitnngsmöglichkeiten zu. Ziel jeder dieser Entwicklungen auf dem Gebiet der katalytischen Umsetzung von Abgas aus einem Verbrennungsmotor ist, eine größtmögliche Umsetzungsrate sicherzustellen.

So geht beispielsweise aus der DE-C-44 16 469 ein metallischer Oxidationskatalysator hervor, der Nickel, Mangan, Chrom und Eisen enthält Die Legierung wird für eine bestimmte Zeit in sauerstoffhaltiger Atmosphäre thermisch behandelt und nach der thermischen Behandlung gegebenenfalls mit einem kohlenwasserstoffhaltigen Gemisch reduziert. Der Katalysator kann in Draht- oder Blechform eingesetzt werden, wobei vorteilhaft mit Drähten mit einem Durchmesser im Bereich von 0,05 bis 0,025 mm gearbeitet wird. Diese Drähte werden zu Drahtgestricken verarbeitet, die als Katalysator eingesetzt werden.

Aus der JP-A-58104084 geht ein Schalldämpfer hervor, der einen Oxidationskatalysator für verbrennbare Reststoffe aufweist. Der Katalysator wird aus einem porösen Körper hergestellt, der mit einem Übergangsmetallfilm oberflächlich beschichtet wird. Der beschichtete Katalysator wird sodann in einer Sauerstoffatmosphäre oxidativ behandelt. Der poröse Körper ist insbesondere Schaummetall, gesintertes Metall oder mit metallischen oder anorganischen Fasern verstärktes Metall. Der Beschichtungsfilm ist beispielsweise aus Ni, Cr, Mn, Cu, Co, Fe oder V aufgebaut.

Ein Verfahren und eine Vorrichtung zum Herstellen eines Wabenkörpers geht beispielsweise auch aus der DE-A-195 36 752 hervor. Der Wabenkörper umfasst mindestens eines Metallfolie, die aus mindestens zwei unterschiedlichen Schichten, insbesondere aus mit Aluminium walzplattiertem Stahl, aufgebaut ist. Die Metallfolie wird vor dem Umformen durch in ihr erzeugte ohmsche Wärme wärmebehandelt. Die Erwärmung erfolgt vorzugsweise durch Induktionsspulen.

Auf dem Gebiet der Kleinmotoren wird ebenfalls die Katalysatortechnik teilweise schon eingesetzt. Bekannt ist aus der DE 37 29 477 C2 ein in einem Schalldämpfergehäuse angebrachter Katalysator, durch den das aus der Motorsäge stammende Abgas strömt. Dieser Katalysator ist bei einer Motorsäge mittels des Schalldämpfers auch nachträglich anbringbar.

Aufgabe der vorliegenden Erfindung ist es, einen Katalysator für einen Kleinmotor zu schaffen, der einerseits eine ausreichende katalytische Umsetzungsrate zur Verfügung stellt und andereseits in einem Abgassystem eines Kleinmotors anwendbar ist, wobei seine Herstellung in wenigen Arbeitsschritten möglich sein soll. Weiterhin ist es Aufgabe der Erfindung, ein Verfahren zur Herstellung eines Katalysators für einen Kleinmotor zu schaffen, bei dem ohne viele aufwendige Herstellungsstationen ein Katalysator herstellbar ist.

Diese Aufgabe wird mit einem Katalysator mit den Merkmalen des Anspruches 1, sowie mit einem Verfahren zur Herstellung eines Katalysators mit den Merkmalen des Anspruches 16. Vorteilhafte Ausgestaltungen, Merkmale und Weiterbildungen sind jeweils in den abhängigen Ansprüchen angegeben.

Ein Katalysator zum Reinigen eines Abgasstromes eines Kleinmotors ist aus einem unedlen Metall, dessen Oxid eine katalytische Aktivität bezüglich eines Gasbestandteiles im Abgasstrom aufweist, wobei das unedle Metall eine Blechform hat und einen vom Abgasstrom durchströmbaren Körper mit Kanälen ausbildet. Ein derartiger Katalysator, der die katalytische Aktivität quasi in bzw. auf sich selbst trägt, weist eine vollkommen neue Richtung. Während bisher mit einem Washcoat und Edelmetallen beschichtete Katalysatorträgerkörper, um die höchstmögliche Umsatzrate zu erreichen, stellt ein erfindungsgemäßer Katalysator eine weniger aufwendige Lösung zur Verfügung. Dieser Katalysator kann gegenüber anderen unter Umständen eine geringere Abgasumsetzungsrate aufweisen. Diese ist jedoch immer noch so ausreichen, daß ein befriedigender Abgasanteil in einem Abgassystem eines Kleinmotors umgesetzt wird.

Ein weiterer Parameter, mit dem die katalytische Umsetzungsrate des Katalysators steuerbar ist, ist die spezifische Oberfläche, die dieser zur Verfügung stellt. Messungen haben ergeben, daß eine spezifische Oberfläche von 10 m²/g bis 20 m²/g eine zufriedenstellende katalytische Umsetzungsrate sicherstellt. Die spezifische Oberfläche definiert sich dabei über die dreidimensionale Struktur des Katalysators. Vorteilhaft für eine hohe spezifische Oberfläche ist daher eine Oberfläche auf dem Metall, die eine Porosität aufweist. Eine derartige Porosität ist durch Verwendung geeigneter Metallegierungen bzw. Legierungsbestandteile beeinflußbar genauso wie über ein geeignetes Herstellungsverfahren. Dabei haben sich als wesentliche Einflußfaktoren die Temperatur aber auch das zeitliche Verhalten der Temperatur erwiesen. Durch geeignetes Zusammenspiel zwischen Temperatur und Zeitdauer des Aufrechterhaltens der Temperatur kann beispielsweise die kristalline Struktur des Metalls bzw. der Legierung so beeinflußt werden, daß eine spezielle Oxidschicht mit den geforderten Eigenschaften sich ausbildet.

Bei einem Abgasstrom von 5 bis 25 m³ je Stunde mit den folgenden Abgasbestandteilen: 6 Vol.-% CO, 1 Vol.-% HC, weist der Katalysator eine katalytisch wirkende Oberfläche von vorzugsweise etwa 10 bis 20 m²/g, mindestens von 7 m²/g auf. Ein derartiger Abgasstrom ist für Kleinmotoren, insbesondere handgeführte Kleinmotoren, typisch. Die katalytisch wirkende Oberfläche ist für eine zufriedenstellende Umsetzungsrate ausreichend, ohne das es zu einem zu einem unerwünscht hohen Temperaturanstieg kommt.

Vorteilhaft wird der Katalysator in einem Schalldämpfer für den Kleinmotor angeordnet. Dieses ermöglicht, den Katalysator beabstandet von den Außenwänden des Schalldämpfers zu haltern. Dadurch gelingt es, eine Wärmeübertragung an ein Außengehäuse über direkten Kontakt zu vermeiden. Bei bisherigen Katalysatoren trat das Problem auf, daß diese bei katalytischer Umsetzung sich sehr stark erhitzten, insbesondere aufgrund eines sehr fetten Abgases beispielsweise bei kleinen Zwei-Taktmotoren. Das austretende Abgas konnte zu heiß und damit eine Gefährdung beispielsweise eines Bedieners oder der Umwelt darstellen. Der vorgeschlagene Katalysator hat nun eine befriedigende katalytische Aktivität. Diese ist jedoch so gewählt, daß das Abgas eine Maximaltemperatur nicht überschreitet. Für Motorsägen, die beispielsweise in Wäldern auch auf den Boden abgelegt werden, liegt ein derartiger Maximalwert bei etwa 750°C. Eine Ausbildung des Katalysators weist daher eine Umsetzungsrate von mindestens 20 % und höchstens etwa 50 % im Durchschnitt einer Summe von umsetzbaren Abgasbestandteilen im Abgasstrom im Katalysator auf.

Der Katalysator, der quasi selbst die katalytische Aktivität zur Verfügung stellt, ist in einer besonders vorteilhaften Ausgestaltung eine Legierung. Zweckmäßig hat es sich erwiesen, wenn die Legierung zumindest einen Bestandteil aus der folgenden Gruppe aufweist: Titan, Vanadium, Zink, Eisen, Chrom, Kupfer, Nickel, Kobalt, wobei diese natürlich auch jeweils allein das Material für den Katalysator sein können. Diese Bestandteile sind entsprechend einer abnehmenden katalytischen Aktivität ihrer Oxide in der angegebenen Reihenfolge angeordnet. Versuche haben gezeigt, daß es besondere Legierungen gibt, die zum einen eine gewünschte Langzeitbeständigkeit aufweisen, insbesondere in Hinsicht auf die im Abgassystem herrschenden hohen Temperaturen, und zum anderen die geforderte katalytische Aktivität aufweisen. Als geeignet haben sich dabei besonders Legierungen mit folgenden Bestandteilen erwiesen: Nickel und Chrom oder Vanadium und Eisen oder Kobalt und Eisen oder Chrom und Eisen oder Titan und Eisen oder Kombinationen dieser Legierungsbestandteile. Titan hat sich als vorteilhaft besonders dann erwiesen, wenn sein Anteil an der Legierung sehr hoch war.

Neben derartigen Legierungen mit den eben aufgezählten Komponenten haben sich auch gewisse Zwei- bzw. Dreikomponentenlegierungen als geeignet erwiesen. Diese Legierungen können auch herstellungsbedingten Unreinheiten aufweisen. Die folgenden Legierungsanteile bei den einzelnen Legierungen haben sich als vorteilhaft im Versuch bewährt: NiCr 80 20.

Da das unedle Metall des Katalysators zwar selbst nicht in der Lage ist, die katalytische Umsetzung durchzuführen, sondern dazu erst ein katalytisch wirksames Oxid ausgebildet sein muß, folgt dieses in einer Weiterbildung schon vor der Verwendung des Metalles als Katalysator. Dadurch wird eine ausreichende Oxidbildung von Anfang an sichergestellt. Bei einer anderen Weiterbildung ist das Metall soweit vorbereitet, daß bei einem vorgebbaren Betrieb des Kleinmotores sichergestellt ist, daß sich eine für die katalytische Reaktion notwendige Oxidschicht schnellstmöglich ausbildet. Dazu muß der Kleinmotor entweder, sofern möglich, mit einem Sauerstoffüberschuß arbeiten oder über eine geeignete Zuführung wird der Sauerstoff, am zweckmäßigsten Luft, zum Metall geführt. Dadurch gelingt das Aufwachsen lassen einer Oxidschicht, insbesondere Oxide der folgenden Zusammensetzung: V₂O₅, Cr₂O₃, Fe₆O₃, Co₃O₄ und/oder TiO₂. Diese weisen eine besonders gute katalytische Wirkung auf und lassen sich bei einer Legierung auch gezielt bilden.

Für die Oxidbildung selbst hat es sich als zweckmäßig erwiesen, daß das Metall als Folie ausgebildet ist. Zum einen ermöglicht dieses eine besonders gute Formbarkeit zu einem durchströmbaren Körper mit Kanälen, zum anderen kann die Folie auch soweit vorgefertigt sein, daß außer einer anschließenden Oxidbildung zur Sicherstellung der katalytischen Fähigkeit des Katalysators keinerlei wesentlichen weiteren Maßnahmen notwendig sind.

Die Langzeitbeständigkeit des Katalysators ist davon abhängig, daß für eine geforderte Anzahl von Betriebsstunden des Kleinmotors ausreichend Material an Metall zur Verfugung steht, welches einen über diesen Betriebszeitraum auftretenden Materialverlust immer wieder ausgleichen kann. Durch eine entsprechende Wanddicke wird dieses sichergestellt. Es ist daher vorteilhaft, daß eine Wand des Metalles, insbesondere einer Folie, die im Abgasstrom angeordnet ist, eine Dicke von mindestens 0,05 mm und vorzugsweise von 0,065 mm bis mindestens 0,11 mm aufweist. Folien dieser Dicke haben sich bei der Herstellung des Katalysators als äußerst verformbar erwiesen, ohne eine zu geringe Stabilität aufzuweisen. Dicken darüber sind aber je nach Anwendung ebenfalls verwendbar. Die. Dicke der Folie muß auch nicht überall gleich sein, sondern kann je nach später im Katalysator für einen Teil der Folie vorgesehenen Bereich angepaßt sein.

Damit einerseits das Oxid dann in ausreichender Menge zur Verfügung steht, zum anderen der Katalysator dann immer noch die geforderten Festigkeitswerte entsprechend seiner Geometrie erfüllt, ist es für die katalytische Umsetzung vorteilhaft, wenn das Metall des Katalysators bzw. der gewünschte Legierungsbestandteil der Legierung etwa zu mindestens 20% und vorzugsweise zwischen 25% und 50% oxidiert ist. Bei Versuchen hat es sich auch als zweckmäßig erwiesen, wenn das Metall des Katalysators eine Oxidschicht aufweist, die eine Dicke von mindestens 2 µm und vorzugsweise von 3 µm bis 5 µm hat. Diese Werte können nach oben wie auch nach unten abweichen, abhängig von dem verwendeten Metall beziehungsweise Legierungsbestandteil. Bei Verwendung von Titan beispielsweise hat sich eine Oxidierung von mindestens 3,5% und vorzugsweise 5% bis 10% als geeignet herausgestellt.

Insbesondere bei Kleinmotoren, die in eng begrenzten Gehäusen untergebracht sein müssen, um insgesamt handlich zu sein, ist der Wärmeabfluß vom einmal gezündeten Katalysator zur Umgebung zur Abkühlung sicherzustellen. Weist der Katalysator eine zu hohe Umsetzungsrate auf, ist der anfallende Wärmestrom unter Umständen zu hoch. Um dieses zu vermeiden, ist die Umsetzungsrate in einer Ausführung des Katalysators, wie oben schon erwähnt, auf mindestens 20% und höchstens 50% beschränkt.

Eine vorteilhafte Weiterbildung weist nun an dem Katalysator eine Kühlvorrichtung auf. Diese ist in der Lage, die sich bei der katalytischen Reaktion entwickelnde Wärme abzuführen bzw. zu senken. Mit der Kühlvorrichtung gelingt es, den Katalysator und/oder das aus dem Katalysator austretende Abgas so weit abzukühlen, daß eine Gefährdung durch die entstandene Wärme ausgeschlossen ist. Eine derartige Kühlvorrichtung ist beispielsweise in der WO 96/23133 beschrieben, eine weitere Möglichkeit zur Kühlung wird in der DE-GM 88 07 068 offenbart, weitere Ausführungen gehen aus der DE 40 17 267 A1 und der DE 37 29 477 C1 hervor. Diese entsprechenden Ausgestaltungen sind auch bei diesem vorgeschlagenen Katalysator vorteilhafterweise einsetzbar, weswegen auf die genannten Dokumente verwiesen wird. Bezüglich des Merkmales der Kühlvorrichtung ist ihr Inhalt auch Bestandteil dieser Beschreibung. Die Kühlvorrichtung ist in der Lage, daß in einer weiteren Ausgestaltung des Katalysators dieser mehr als 50 % Umsetzungsrate aufweist und die zusätzlich entstehende Wärme mittels der Kühlvorrichtung abgeführt und die Temperatur gesenkt wird.

Die Erfindung stellt weiterhin ein Verfahren zur Herstellung eines Katalysators mit einer wabenkörperähnlichen Geometrie zum Reinigen eines Abgasstromes eines Kleinmotors zur Verfügung. Der Katalysator ist aus einer metallenen Folie aufgebaut. Die metallene Folie wird temperiert, bis sich eine Oxidschicht mit dem Metall aus der Folie selbst bildet, das anschließend als Katalysator dient. Vorteilhafterweise wird eine Folie mit Chrom als Legierungsbestandteil oder nahezu reines Titan verwendet. Eine derartige Legierung ist einerseits gut oxidierbar, das Oxid wiederum als Katalysator einsetzbar und die Legierung andererseits auch gut verformbar.

Zur Ausbildung der Oxidschicht wird die Folie vorzugsweise auf eine Temperatur von etwa 400°C bis etwa 1100°C für eine gewisse Zeit gehalten. Die Zeit ist im wesentlichen von Parametern wie dem Material, der Oxidationsatmosphäre, Oberflächenbeschaffenheit, gewünschte Gitterart des Materials und ähnlichem abhängig und kann daher ganz unterschiedliche Werte annehmen. Diese Zeit ist jedoch so gewählt, daß eine Ausbildung der Oxidschicht in genügender Dicke sichergestellt ist. Ein für sehr viele Metalle anwendbarer Temperaturbereich liegt zwischen 500°C und 850°C. Zu beachten ist gegebenenfalls auch das den Katalysator umgebende Material, so daß durchaus auch andere Temperaturen als vorteilhaft in den genannten Bereichen in Frage kommen. Beispielsweise bei ferritischen Mantelgehäusen sind Temperaturen bis 850°C gut anwendbar, wobei Temperatur-Haltezeiten von etwa einer halben Stunde oder auch einer Stunde ausreichend sein können.

Bei der Oxidierung ist zu berücksichtigen, daß bei einer hohen Temperatur die Bildung des Oxides mit einer hohen Dichte einhergeht. Daraus kann sich dann eine spezifische Oberfläche ergeben, die geringer liegt als die spezifische Oberfläche bei niedrigerer Temperatur zur Bildung der Oxidschicht. Bei niedrigerer Temperatur weist das Oxid auch eine geringere Dichte auf. Dieser Zusammenhang im Zusammenspiel mit der Zeit läßt sich bei den einzelnen Materialien so ausnutzen, daß eine jeweils geeignete Oxidschicht gewünschter spezifischer Oberfläche und Dichte auf dem Metall aufgebaut werden kann.

Ein Aufwachsenlassen einer Oxidschicht ist wiederum durch die Art und Weise der Temperierung der Folie gezielt steuerbar. Unterstützt wird das Oxidieren durch Verwendung einer Atmosphäre mit höherem Sauerstoffanteil als bei Luft. Dadurch gelingt es, daß die metallene Folie die gewünschte Oxidschicht und -dicke ausbildet, ohne daß unerwünschte Komponenten ebenfalls in dieser Schicht sich ansammeln. Als Atmosphäre ist beispielsweise auch ein Schutzgas anwendbar, welches mindestens 5 [Vol.-%] Sauerstoff enthält. Dieses Schutzgas ist so ausgewählt, daß es keine unerwünschten Reaktionen auf der Oberfläche zuläßt, wie es beispielsweise bei einem Inertgas der Fall ist. Atmosphärenanteile, die die Oxidation behindern wie CO oder Kohlenwasserstoffe durch ihre Reduktionswirkung, werden dadurch vermieden.

Das Aufwachsenlassen der Oxidschicht kann weiterhin auch gezielt gesteuert werden durch Verwendung von bei Erhitzung Sauerstoff abgebendem Auftrag auf das zu oxidierende Material. Dieser Auftrag kann gesprüht oder durch sonstige Bezhandlung aufgebracht sein. Weiterhin ist es auch möglich, die Oxidation durch Beeinflussung der zu oxidierenden Oberfläche zu begünstigen, beispielsweise durch Aufrauhen oder anderen Oberflächenbehandlungsmethoden.

Eine weitere Ausbildung des Verfahrens sieht das Herstellen der wabenkörperähnlichen Geometrie aus der Folie und anschließendes Oxidieren dieses Körpers vor. Aber umgekehrt, erst Oxidieren der Folie und anschließend Herstellen der wabenkörperähnlichen Geometrie ist ebenfalls möglich.

Weitere vorteilhafte Weiterbildungen und Ausgestaltungen werden in der Zeichnung angegeben. Es zeigen:
- Fig. 1: eine Herstellungsstraße zur Oxidation einer metallenen Folie,
- Fig. 2: einen Schnitt durch eine metallene Folie mit Oxidierung,
- Fig. 3: einen Katalysator aus Folie mit wabenkörperähnlicher Geometrie und
- Fig. 4: einen Kleinmotor mit Abgassystem.

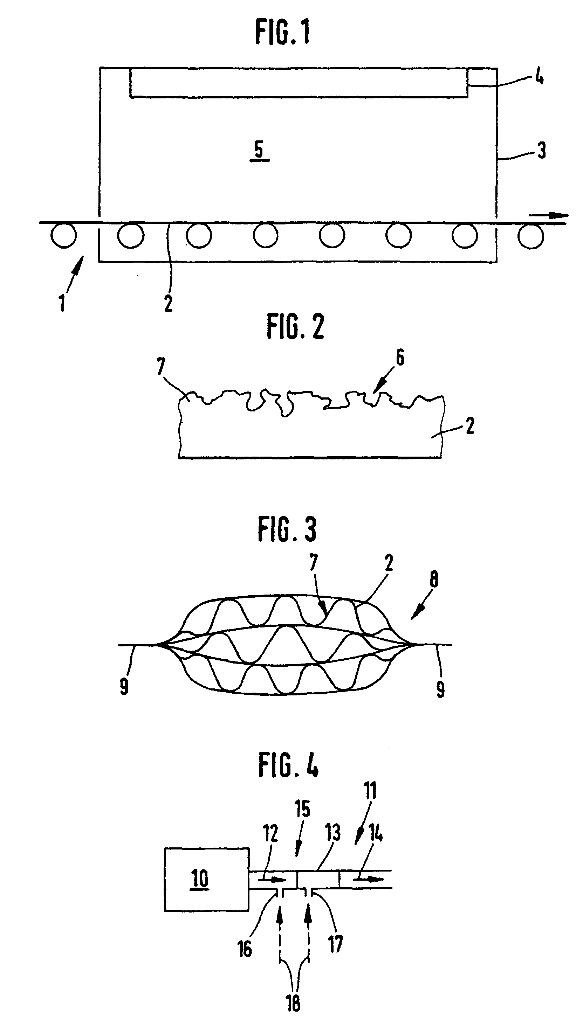

Fig. 1 zeigt eine Bandstraße 1, auf der kontinuierlich eine Folie 2 aus unedlem Metall in Pfeilrichtung transportiert wird. Über der Bandstraße 1 ist eine Abdeckung 3 angeordnet. In der Abdeckung befindet sich ein Heizgerät 4. Dieses strahlt die erzeugte Wärme direkt auf die Folie 2. In der Abdeckung 3 befindet sich eine spezielle Atmosphäre 5, die das Aufoxidieren einer Schicht auf die Folie 2 ermöglicht bzw. unterstützt. Die Aufoxidierung hängt von verschiedenen Parametern ab, beispielsweise der Bandgeschwindigkeit der Bandstraße 1, der Zusammensetzung der Atmosphäre 5, der Wärmeabgabe des Heizgerätes 4, dem verwendeten Material der Folie 2, gegebenenfalls entsprechende weiterer Oxidationshilfen. Neben diesem kontinuierlichen Herstellungsverfahren einer Folie 2 mit aufoxidierter Oberfläche ist dieses aber auch diskontinuierlich durchführbar. Dazu wird in einer Ausführung die Folie 2 aufgetrommelt und in einem entsprechenden Ofen unter Einwirkung von Wärme gelagert.

Fig. 2 zeigt einen schematischen Schnitt durch die Folie 2. Auf einer Oberfläche 6 hat sich eine Oxidschicht 7 ausgebildet. Diese ist in der Lage, Abgase katalytisch umsetzen zu können.

Fig. 3 zeigt eine Ausgestaltung eines Wabenkörpers 8 aus Folie 2 mit einer Oxidschicht 7. Dieser Wabenkörper 8 ist insbesondere in einem Schalldämpfer für einen Kleinmotor einsetzbar, wobei seine beiden seitlichen Träger 9 aus zusammengequetschter Folie 2 zum Halten im Schalldämpfer wie auch zur Führung eines den Wabenkörper 8 umströmenden Gasstromes dienen.

Fig. 4 zeigt einen Kleinmotor 10, an den ein Abgassystem 11 angeschlossen ist. Aus dem Kleinmotor 10 tritt ein erster Abgasstrom 12 aus, angedeutet durch einen Pfeil. Der erste Abgasstrom 12 durchströmt einen Schalldämpfer 13, in dem der Katalysator angeordnet. Aus dem Schalldämpfer 13 tritt ein zweiter, katalytisch umgesetzter Abgasstrom 14 aus. Zwischen dem ersten Abgasstrom 12 und dem zweiten Abgasstrom 14 besteht unter Umständen eine Massendifferenz. Diese rührt daher, daß das Abgassystem 11 eine Kühlvorrichtung 15 aufweist. Über ein erstes 16 und ein zweites 17 Ventil strömt von außerhalb des Abgassystemes 11 Umgebungsluft 18 ein, wodurch die Abgastemperatur gesenkt wird. Das zweite Ventil 17 mit seinen Strömungswegen ist in der Lage, den im Schalldämpfer 13 befindlichen Katalysator auch von außen zu kühlen.

Der Katalysator aus einem unedlen Metall, dessen Oxid eine katalytische Aktivität aufweist, erlaubt eine kostengünstige Herstellungsweise, weswegen dieser Katalysator insbesondere in einem handgeführten Gerät mit einem Kleinmotor verwendet wird.

### Bezugszeichenliste

- 1: Bandstraße
- 2: Folie
- 3: Abdeckung
- 4: Heizgerät
- 5: Atmosphäre
- 6: Oberfläche
- 7: Oxidschicht
- 8: Wabenkörper
- 9: Träger
- 10: Kleinmotor
- 11: Abgassystem
- 12: erster Abgasstrom
- 13: Schalldämpfer
- 14: zweiter Abgasstrom
- 15: Kühlvorrichtung
- 16: erstes Ventil
- 17: zweites Ventil
- 18: Umgebungsluft

## Patentansprüche

1. Katalysator zum Reinigen eines Abgasstromes (12) von 5 bis 25 m³ je Stunde eines Kleinmotors (10), aus einem unedlen Metall, dessen Oxid eine katalytische Aktivität bezüglich eines Gasbestandteiles im Abgasstrom (12) aufweist, wobei das unedle Metall eine Blechform hat und einen vom Abgasstrom durchströmbaren Körper (8) mit Kanälen ausbildet, **dadurch gekennzeichnet, daß** der Katalysator eine spezifische Oberfläche von 10 bis 20 m²/g aufweist.

2. Katalysator nach Anspruch 1, **dadurch gekennzeichnet, daß** der Katalysator in einem Schalldämpfer (13) für den Kleinmotor (10) angeordnet ist.

3. Katalysator nach Anspruch 1 oder 2, **dadurch gekennzeichnet, daß** das Metall eine Legierung ist.

4. Katalysator nach Anspruch 1, 2 oder 3, **dadurch gekennzeichnet, daß** die Legierung zumindest einen Bestandteil aus der folgenden Gruppe aufweist: Ti, V, Zn, Fe, Cr, Cu, Ni, Co.

5. Katalysator nach Anspruch 4, **dadurch gekennzeichnet, daß** die Legierung folgende Bestandteile hat:
Ni und Cr oder V und Fe oder Co und Fe oder Cr und Fe oder Ti.

6. Katalysator nach Anspruch 4, **dadurch gekennzeichnet, daß** der Legierungsbestandteil einen Legierungsanteil zwischen 2% und 20%, vorzugsweise zwischen 5% und 10% hat.

7. Katalysator nach einem der vorhergehenden Ansprüche, **dadurch gekennzeichnet, daß** das Metall vor der Verwendung als Katalysator schon oxidiert ist und ein katalytisch wirksames Oxid ausgebildet hat.

8. Katalysator nach einem der vorhergehenden Ansprüche, **dadurch gekennzeichnet, daß** das Metall als Folie (2) ausgebildet ist.

9. Katalysator nach einem der vorhergehenden Ansprüche, **dadurch gekennzeichnet, daß** eine Wand des Metalles im Abgasstrom (12) eine Dicke von mindestens 0,05 mm, aufweist.

10. Katalysator nach einem der vorhergehenden Ansprüche, **dadurch gekennzeichnet, daß** eine Oberfläche (6) auf dem Metall eine Porosität aufweist.

11. Katalysator nach einem der vorhergehenden Ansprüche, **dadurch gekennzeichnet, daß** das Metall zu etwa mindestens 20 %, vorzugsweise zwischen 25 % und 50% oxidiert ist, bei Verwendung von Titan zu mindestens 3,5 % und vorzugsweise zwischen 5 % und 10 %.

12. Katalysator nach einem der vorhergehenden Ansprüche, **dadurch gekennzeichnet, daß** das Metall eine Oxidschicht (7) aufweist, die eine Dicke von mindestens 2 µm, vorzugsweise von 3 µm bis 5 µm hat.

13. Katalysator nach einem der vorhergehenden Ansprüche, **dadurch gekennzeichnet, daß** der Katalysator eine Umsetzungsrate von mindestens 20 % und höchstens etwa 50 % im Durchschnitt einer Summe von umsetzbaren Abgasbestandteilen im Abgasstrom (12) vor dem Katalysator aufweist.

14. Katalysator nach einem der vorhergehenden Ansprüche, **dadurch gekennzeichnet, daß** an dem Katalysator eine Kühlvorrichtung (15) angeschlossen ist.

15. Verwendung eines Katalysators nach einem der vorhergehenden Ansprüche für ein handgeführtes Gerät mit einem Kleinmotor (10).

16. Verfahren zur Herstellung eines Katalysators gemäß einem der Ansprüche 1 bis 14 mit einer wabenkörperähnlichen Geometrie zum Reinigen eines Abgasstromes (12) eines Kleinmotores (10), wobei der Katalysator aus einer metallenen Folie (2) aufgebaut ist, mit:
- Temperieren der metallenen Folie (2), bis sich eine Oxidschicht (7) mit dem Metall aus der Folie (2) selbst bildet, das anschließend als Katalysator dient.

17. Verfahren nach Anspruch 16 mit Verwenden einer Folie (2) aus einer Legierung von Fe mit Cr, V, Co und/oder Ti für den Katalysator.

18. Verfahren nach Anspruch 16 oder 17 mit Halten der Folie (2) auf einer Temperatur von etwa 400 °C bis etwa 500 °C für mindestens 30 Minuten.

19. Verfahren nach Anspruch 18 mit Aufwachsen lassen einer Oxidschicht (7) von V₂O₅, Cr₂O₃, Fe₆O₃, Co₃O₄ und/oder TiO₂.

20. Verfahren nach einem der Ansprüche 16 bis 19 mit Oxidieren in einer Atmosphäre mit mindestens 5 Vol.-% Sauerstoff.

21. Verfahren nach einem der Ansprüche 16 bis 20 mit Herstellen der wabenkörperähnliche Geometrie aus der Folie (2) und anschließend Oxidieren des Körpers oder umgekehrt.

## Claims

1. A catalytic converter for cleaning an exhaust-gas stream (12) of a small engine (10) of 5 to 25 m³ per hour comprising a base metal, the oxide of which has a catalytic activity with regard to a gas constituent in the exhaust-gas stream (12), wherein the base metal being in sheet form and forming a body (8) through which a stream of exhaust gas can flow with channels, **characterized in that** the catalytic converter has a specific surface of 10 to 20 m²/g.

2. Catalytic converter according to claim 1, **characterized in that** the catalytic converter is arranged in a muffler (13) for the small engine (10).

3. Catalytic converter according to claim 1 or 2, **characterized in that** the metal is an alloy.

4. Catalytic converter according to claim 1, 2, or 3, **characterized in that** the alloy comprises at least one constituent selected from the following group:
Ti, V, Zn, Fe, Cr, Co, Ni, Co.

5. Catalytic converter according to claim 4, **characterized in that** the alloy has the following constituents:
Ni and Cr or V and Fe or Co and Fe or Cr and Fe or Ti.

6. Catalytic converter according to claim 4, **characterized in that** the alloying constituent represents a proportion of the alloy of between 2 % and 20 %, preferably between 5 and 10 %.

7. Catalytic converter according to one of the preceding claims, **characterized in that** the metal before being used as a catalyst, is already oxidized and has formed catalytically active oxide.

8. Catalytic converter according to one of the preceding claims, **characterized in that** the metal is formed as a foil (2).

9. Catalytic converter according to one of the preceding claims, **characterized in that** a wall of the metal in the exhaust gas stream (12) has a thickness of at least 0.05 mm.

10. Catalytic converter according to one of the preceding claims, **characterized in that** a surface (6) on the metal is porous.

11. Catalytic converter according to one of the preceding claims, **characterized in that** the metal is oxidized to an extent of approximately at least 20 %, preferably to an extent of between 25 % and 50 %, in case that Titanium is used, to an extent of at least 3.5 % and preferably to an extent of between 5 % and 10 %.

12. Catalytic converter according to one of the preceding claims, **characterized in that** the metal comprises an oxide layer (7) having a thickness of at least 2 µm, preferably of 3 µm to 5 µm.

13. Catalytic converter according to one of the preceding claims, **characterized in that** the catalytic converter has an average conversion rate of at least 20 % and at most approximately 50 % of the total of convertible exhaust-gas constituents in the exhaust-gas stream (12) upstream of the catalytic converter.

14. Catalytic converter according to one of the preceding claims, **characterized in that** a cooling device (15) is connected to the catalyst.

15. Use of a catalyst according to one of the preceding claims for a hand-held appliance with a small engine (10).

16. A process for manufacture of a catalytic converter according to one of claims 1 to 14 with a honeycomb-like geometry for the purification of an exhaust-gas stream (12) of a small engine (10), wherein the catalyst is composed of a metal foil (2), comprising:
- heat treatment of the metal foil (2) until a layer (7) of oxide comprising the metal from the foil (2) itself is formed which subsequently serves as the catalyst.

17. Process according to claim 16 using a foil (2) made of an alloy of Fe with Cr, V, Co and/or Ti as the catalyst.

18. Process according to claim 16 or 17, wherein the foil (2) is held at a temperature from approximately 400°C to approximately 500°C for at least 30 minutes.

19. Process according to claim 18, wherein an oxide layer (7) of V₂O₅, Cr₂O₃, Fe₆O₃, Co₃O₄ and/or TiO₂ is allowed to grow.

20. Process according to one of claims 16 to 19, where oxidation is carried out in an atmosphere which contains at least five Vol-% oxygen.

21. Process according to one of claims 16 to 20, comprising production of the honeycomb-like geometry from the foil (2) and subsequent oxidation of the body or vice versa.

## Revendications

1. Catalyseur pour l'épuration d'un flux de gaz d'échappement (12) de 5 à 25 m³ par heure d'un moteur de petite dimension (10) d'un métal commun dont l'oxyde présente une activité catalytique par rapport à un constituant de gaz dans le flux de gaz d'échappement (12), le métal commun ayant une forme de tôle et formant un corps (8) avec des canaux, lequel peut être parcouru par le flux de gaz d'échappement, **caractérisé en ce que** le catalyseur a une surface spécifique de 10 à 20 m²/g.

2. Catalyseur selon la revendication 1, **caractérisé en ce que** le catalyseur est agencé dans un silencieux (13) pour le moteur de petite dimension (10).

3. Catalyseur selon la revendication 1 ou 2, **caractérisé en ce que** le métal est un alliage.

4. Catalyseur selon la revendication 1, 2 ou 3, **caractérisé en ce que** l'alliage présente au moins un constituant choisi du groupe suivant : Ti, V, Zn, Fe, Cr, Cu, Ni, Co.

5. Catalyseur selon la revendication 4, **caractérisé en ce que** l'alliage a les constituants suivants :
Ni et Cr ou V et Fe ou Co et Fe ou Cr et Fe ou Ti.

6. Catalyseur selon la revendication 4, **caractérisé en ce que** le constituant d'alliage a une part d'alliage entre 2 % et 20 %, de préférence entre 5 % et 10 %.

7. Catalyseur selon l'une des revendications précédentes, **caractérisé en ce qu'**avant d'être utilisé en tant que catalyseur le métal est déjà oxydé et a formé un oxyde à activité catalytique.

8. Catalyseur selon l'une des revendications précédentes, **caractérisé en ce que** le métal est réalisé en tant que feuille (2).

9. Catalyseur selon l'une des revendications précédentes, **caractérisé en ce qu'**une paroi du métal dans le flux de gaz d'échappement (12) a une épaisseur d'au moins 0,05 mm.

10. Catalyseur selon l'une des revendications précédentes, **caractérisé en ce qu'**une surface (6) sur le métal est poreuse.

11. Catalyseur selon l'une des revendications précédentes, **caractérisé en ce que** le métal est oxydé environ pour au moins 20 %, de préférence entre 25 % et 50 %, dans le cas où du titane serait utilisé pour au moins 3,5 % et de préférence entre 5 % et 10 %.

12. Catalyseur selon l'une de revendications précédentes, **caractérisé en ce que** le métal présente une couche d'oxyde (7) qui a une épaisseur d'au moins 2 µm, de préférence de 3 µm à 5 µm.

13. Catalyseur selon l'une des revendications précédentes, **caractérisé en ce que** le catalyseur a un taux de conversion d'au moins 20 % et au maximum d'environ 50 % en moyenne du total de constituants de gaz d'échappement convertibles dans le flux de gaz d'échappement (12) en amont du catalyseur.

14. Catalyseur selon l'une des revendications précédentes, **caractérisé en ce qu'**un dispositif de refroidissement (15) est raccordé au catalyseur.

15. Utilisation d'un catalyseur selon l'une des revendications précédentes pour un appareil portatif avec un moteur de petite dimension (10).

16. Procédé de fabrication d'un catalyseur selon l'une des revendications 1 à 14 avec une géométrie semblable à un corps en nids d'abeilles pour l'épuration d'un flux de gaz d'échappement (12) d'un moteur de petite dimension (10), le catalyseur étant construit d'une feuille métallique (2), comportant :
- Traitement thermique de la feuille métallique (2) jusqu'à ce qu'une couche d'oxyde (7) avec le métal de la feuille (2) elle-même se forme, qui ensuite sert de catalyseur.

17. Procédé selon la revendication 16 avec l'utilisation d'une feuille (2) d'un alliage de Fe avec Cr, V, Co et/ou Ti pour le catalyseur.

18. Procédé selon la revendication 16 ou 17, dans le cas duquel la feuille (2) est maintenue à une température d'environ 400°C jusqu'à environ 500 °C pour au moins 30 minutes.

19. Procédé selon la revendication 18, où on permet la croissance d'une couche d'oxyde (7) de V₂O₅, Cr₂O₃, Fe₆O₃, CO₃O₄ et/ou de TiO₂.

20. Procédé selon l'une des revendications 16 à 19, où l'oxydation est effectuée dans une atmosphère d'au moins 5 Vol% d'oxygène.

21. Procédé selon l'une des revendications 16 à 20, comportant la production de la géométrie semblable à un corps en nids d'abeilles à partir de la feuille (2) et ensuite l'oxydation du corps ou vice versa.
